# FASCICULE DE BREVET EUROPEEN

(11) **EP 2 213 154 B1**
(45) Date de publication et mention de la délivrance du brevet: **24.01.2018**
(21) Numéro de dépôt: 09075566.1
(22) Date de dépôt: 21.12.2009
(51) Int. Cl.: A01C 21/00, C05F 11/00

(54) **Utilisation d'oses et d'osides en biofertilisation azotobactérienne**
Verwendung von Osen und Osiden für Azotobacter Düngung
Use of oses and osides for azotobacterian biofertilisation

(30) Priorité: 03.02.2009 FR 0900428
(43) Date de publication de la demande: 04.08.2010
(73) Titulaire: Agronutrition, 31390 Carbonne (FR)
(72) Inventeur: Claude, Pierre-Philippe, 54000 Nancy (FR)
(74) Mandataire: Lassiaille, Christian Michel

(56) Documents cités:
- EP-A1- 0 090 091
- WO-A1-90/02719
- US-A- 5 005 345

## Description

### DOMAINE TECHNIQUE DE L'INVENTION

Le domaine technique de l'invention concerne la biofertilisation bactérienne, notamment azotobactérienne des grandes cultures agronomiques. Il est question d'utilisation inocula bactériens et de co-formulants à base de sucres facilement assimilables par les bactéries du sol.

### ÉTAT DE LA TECHNIQUE

### La biofertilisation par l'azotobactérisation des rhizosphères et des « résidusphères »

Les BFCP (bactéries favorisant la croissance des plantes) colonisent les racines de certaines cultures, les résidus de cultures (pailleux), les engrais organominéraux et/ou les biomasses racinaires résiduelles. Les BFCP appartiennent à plusieurs genres, y compris *Agrobacterium, Alcaligenes, Arthrobacter, Azotobacter, Bacillus, Cellulomonas, Flavobacterium, Pseudomonas, (Brady)rhizobium* et *Xanthomonas.* Leurs modes d'action comprennent : (i) la production de sidérophores extracellulaires (agents microbiens de transport du fer) qui peuvent s'associer de manière efficace avec le fer présent dans l'environnement en le rendant moins disponible pour certaines microflores naturelles non-phytogènes, (ii) l'antibiose contre des bactéries et des champignons pathogènes, (iii) la production de substances favorisant la croissance, et iv) la solubilisation des phosphates organiques et inorganiques.

Plus particulièrement, la biofertilisation azotobactérienne consiste en l'utilisation d'inocula BFCP diazotrophes, avantageusement *Azotobaceraceae.* Le genre *Azotobacter* est composé d'au moins 6 espèces, y compris notamment *Azotobacter chroococcum* et *Azotobacter vinelandii.* Les *Azotobacteraceae* sont des bactéries libres, aérobies et capables de fixer l'azote de manière non symbiotique. Leurs populations peuvent varier dans le sol mais ne dépasse que très rarement 10² à 10³ par g de sol.

La plupart des rapports d'études concernant la biofertilisation azotobactérienne et assimilée décrivent l'azotobactérisation des semences. Or, puisqu'il semble que l'exsudation de C des racines dépend de la simple diffusion (Jones et Darrah 1996, in : Jones *et al*. 2004), la présence de bactéries dans la ***rhizosphère*** devrait accroître cette exsudation, au risque de représenter à terme un coût-en-carbone (« carbon cost » ; Lynch et Ho 2005 - ou « coût respiratoire) excessif et pénalisant en termes agronomiques. Il existe effectivement des données expérimentales démontrant que le taux d'exsudation carbonée peut être fortement stimulé par la présence de *rhizobactéries* (Nguyen et Guckert 2001, Lynch et Ho 2005).

En principe, la bactérisation des *résidusphères* au lieu des rhizosphères, elle, permettra d'éviter cette ponction en procurant aux dites BFCP une source alternative de carbone. Cela dit, selon nos récentes publications (Claude et Fillion 2004, Claude et Giroux 2006) l'activité des BFCP en proximité des racines peuvent néanmoins compromettre leur utilité agronomique du fait d'une concurrence pour l'Nm normalement disponible à la plante. En effet, l'azotobactérisation des résidus de cultures au sol et/ou des engrais organo-minéraux (EOM) provoquera vraisemblablement une « sur-immobilisation » de l'azote minéral normalement disponible à la plante.

### L'optimisation de l'azotobactérisation des résidusphères

Il-y-a une distinction à faire entre l'activité *in situ* des *Azotobacter* et de leurs éventuelles utilités agronomiques. A *priori,* Il est raisonnable d'essayer d'optimiser l'utilité agronomique *d'Azotobacteraceae* ainsi réintroduites en proximité des résidus de culture pailleux en ; (i) assurant une fertilisation raisonnée (Claude et Fillion 2004), et (ii) en agissant sur la taille des « puits » à l'aide de bio-stimulants et/ou d'ANN (agents azoto-nutritionnels). Or, cette dernière approche est problématique puisque la réduction de la taille des puits, bien que bon indicateur de l'activité *in situ* des *Azotobacteraceae* en terme de compétition bactéries - racines pour N, n'affectera pas appréciablement les rendements du fait que malgré cette réduction ils demeurent bien au dessus d'un éventuel seuil critique d'envions 20 à 24 grains par épi, selon Wheeler *et al*. 1996. En ce sens, j'ai proposé comme solution technique à ce problème d'ajustement de la fertilisation N en présence *d'Azotobacteraceae* une meilleure compétitivité des racines en présence de biomasses azotobactériennes *résidusphériques* particulièrement actives. Il s'agit d'appliquer un agent azoto-nutritionnel à la culture d'hiver semée sur résidus de culture au sol azotobactérisés ; la stimulation de la nitrate réductase (NR) et de la glutamate synthétase (GS) chez la plante lui permet de contrer partiellement cette concurrence pour l'azote des azotobacters particulièrement actives dans la résidusphère. Cela dit, ces ANN ne font qu'agir indirectement sur la compétitivité des racines ; la stimulation des enzymes NR et GS racinaires ce fait via le feuillage et les divers signaux moléculaires ainsi induits doivent être transmis au travers la plante au risque donc d'une atténuation partielle, voire complète.

Pour ce qui concerne la fertilisation raisonnée. L'azotobactérisation des résidus de culture pailleux au sol a traditionnellement été aperçue comme une façon de réduire les apports d'engrais N. Ce paradigme amena la plupart des intervenants (voir par exemple, Martin et Brown 1938 ; Baltensperger *et al*. 1978 ; Yadav *et al*. 2003 ; Kumar et Ahlawat 2004, Senapati et al 2004, Kader *et al*. 2000 et 2002, Mahboob et Asghar 2002, Idris 2003) à préconiser *de facto* une « sous-fertilisation » des parcelles ainsi biofertilisées sous prétexte qu'il faut éviter la rétroaction négative *via* l'opéron *nif*LA de la nitrogenase par l'azote minéral (Brewin *et al*. 1999). Or, la sous-fertilisation peut toujours favoriser l'activité *in situ* des *Azotobacteraceae,* sans pour autant en optimiser l'utilité agronomique. En systèmes de cultures à faibles rendements, cette « sous fertilisation » est plus ou moins la norme (eg. Senapati et al 2004). En systèmes de cultures plus intensifs cependant, cette sous-fertilisation doit être imposée en apportant qu'une fraction de la dose d'azote recommandée. Or, la fertilisation raisonnée avec pilotage intra - saisonnier des apports d'engrais N et P permet en principe d'optimiser cette fertilisation N en présence *d'Azotobacteraceae* (Claude et Fillion 2004), nécessite un apport technique parfois perçu comme onéreux.

### Dynamique et amplitude des teneurs en carbone soluble et/ou assimilable du sol

Le taux de matière organique du sol (MOS) est en soi peu révélateur de la dynamique des populations bactériennes du sol, y compris donc des *Azotobacteraceae.* En effet, le carbone organique du sol (COS) peut être présent sous diverses formes plus ou moins assimilables par les bactéries du sol ; organo-minérales, acides phénoliques libres ou condensés, glucides (oses, osides ou polysaccharides), carbonates, biomasses microbienne résiduelles, etc. Pour ce faire une idée de ces dynamiques et amplitude du COS, j'ai répertorié au Tableau 1 une série de valeurs concernant les teneurs en COS les plus assimilables en ce sens, notamment ici en équivalents C-glucose par hectare (ha), un ha de sol arables sur 10 cm de profondeur comportant ici environ 10⁹ g de sol et, le cas échéant, environ 10⁷ g de résidus de culture pailleux.

**Tableau 1 :**

| **Valeur rapporté** | **unités** | **équivalent glucose** (g par ha de résidus de culture pailleux) | Référence |
|---|---|---|---|
| 54 | uM glucose | 200 | Hill *al*. 2009 |
| 74 | uM glucose | 300 | Nguyen et Guckert 2001 |
| 0,4 | mM C-soluble sol | 500 | Eiler *et al.* 2003 |
| 0,15 | mM C-soluble sol | 2 000 | Eiler *et al.* 2003 |
| 0,28 | mM C-soluble sol | 4 000 | Eiler *et al.* 2003 |
| 188 | ug C / jour (x 14 jours) | 5 630 | Griffiths et al 1999 |
| 0,54 | mM C-soluble sol | 8 000 | Eiler *et al.* 2003 |
| 375 | ug C / jour (x 14 jours) | 11 230 | Griffiths et al 1999 |
| 0,83 | mM C-soluble sol | 12 000 | Eiler *et al.* 2003 |
| 1,27 | mM C-soluble sol | 18 000 | Eiler *et al.* 2003 |
| 5 | ug C-glucose / g sol | 20 000 | Mondini *et al.* 2006 |
| 938 | ug C / jour (x 14 jours) | 28 090 | Griffiths et al 1999 |
| 10 | ug C-glucose / g sol | 40 000 | Mondini *et al.* 2006 |
| 2,53 | mM C-soluble sol | 40 000 | Eiler *et al.* 2003 |
| 11,3 | ug C-glucose / g sol | 45 000 | DeNobili *et al.* 2001 |
| 11,3 | ug C-glucose / g sol | 45 000 | Hamer et Marschner 2005 |
| 1875 | ug C / jour (x 14 jours) | 56 150 | Griffiths et al 1999 |
| 15 | ug C-glucose / g sol | 60 000 | Mondini *et al.* 2006 |
| 300 | ug C-glucose / cm2 | 75 000 | Falchini *et al.* 2003 |
| 30 | ug C-glucose / g sol | 120 000 | Hoyle *et al.* 2008 |
| 50 | ug C-glucose / g sol | 200 000 | Hoyle *et al.* 2008 |
| 9375 | ug C / jour (x 14 jours) | 280 749 | Griffiths et al 1999 |
| 18750 | ug C / jour (x 14 jours) | 561 497 | Griffiths et al 1999 |
| 495 | mg C-glucose / kg sol | 3 500 000 | Fontaine *et al.* 2004 |
| 3 | mg C-sucrose / g sol | 3 à 5 000 000 | Engelking et al 2007 |

A noter qu'entre les premières valeurs de l'ordre de 200 à 300 g-glucose/ha (Nguyen et Guckert 2001, Hill et al. 2009) et les dernières de l'ordre de 3 à 5 000 000 g-glucose/ha (Engelking et al. 2007) il y a un facteur de 15 000. Cet écart reflète une grande diversité d'hypothèses de travail. Par exemple, Nguyen et Guckert 2001 s'intéressent à l'impacte de la solubilité de C dans les sols sur les flux nutritionnels au sein de ceux-ci - notamment des durée de résidence et de demi-vie (*half-life,* t_{1/2} ; Hill et al. 2009), tandis que Griffiths et al. 1999, Eiler et al. 2003, et Falchini et al. 2003 eux cherchent à comprendre le rôle de ce COS sur la structure phyllogénétique des communautés bactériennes. De Nobili et al. 2001 et Hoyle et al. 2008 eux s'intéressent à la théorie des « trigger molecules » afin de mieux comprendre l'amorçage de la dégradation de la MOS par l'apport de matières organique fraîches, telles que des résidus de culture pailleux par exemple (voir aussi Hamer et Marschner 2005a et 2005b). Un peu dans le même sens, Mondini et al. 2006 élucident les dynamiques de dormance et de réactivation des cellules bactériennes dans les sols. Enfin, Engelking et al. 2007 précisent d'impacte des rapports C/N des résidus de culture pailleux sur le développement rapide de la biomasse microbienne du sol.

Or, l'applicabilité agronomique de ces hypothèses est généralement réservée aux inocula rhizosphériques - la rhizosphère étant perçue comme une source privilégiée de carbone pour les bactéries du sol, ou encore de l'utilisation de sols arables comme puits *(sinks)* de carbone atmosphérique - l'amorçage de la décomposition de la MOS par des apports de matière organique fraîche tels que les résidus de culture pailleux étant particulièrement contreproductive en ce sens. Enfin, ces notions concernant le COS et la dégradation accélérée de la MOS sont aussi applicables au secteur de la biorestauration des sols pollués. Cependant, à la lumière de l'état de la technique décrite ici, l'applicabilité desdites « trigger molecules » à la biofertilisation (azoto)bactérienne sur résidus de culture pailleux au sol - elle, n'est pas apparente ou évidente.

### « Déclenchage » par opposition à « amorçage » de la flore bactérienne du sol

Au niveau de l'écosystème la biodisponibilité du carbone (« C availability index », Dilly *et al.* 2000, Alexander *et al*. 2000, 2001) est inversement proportionnel à la quantité de biomasse microbienne métaboliquement réactive (« métabolic-responsive biomasse », Dilly *et al*. 2000). En d'autre mots, là où le carbone est peu assimilable à court terme, les biomasses bactériennes les plus réactives sont les plus dominantes. Ce métabolisme microbien peut être soit « amorcé », soit « démarré ».

Par amorçage métabolique (AM ; *metabolic priming*) il est entendu qu'un certain apport de substrat carboné assimilable par lesdites bactéries provoque à moyen terme (heures, jours) une utilisation plutôt que son accumulation immédiate, de la matière organique soluble (MOS) comme substrat carboné (Kuzyakov et al *et al*. 2002). Par « *déclanchage métabolique* » (DM ; *metabolic triggering*) il est entendu que la quantité de C minéralisé d'origine édaphique est supérieure à court terme (minutes, heures) à la quantité de substrat carboné apportée en petites quantités, soit de l'ordre de quelques microgrammes par g de sol (De Nobili *et al*. 2001). Historiquement, ces phénomènes DM et AM sont surtout été appréciés entant que facteurs pouvant régir la minéralisation et/ou le stockage (l'accumulation) *in situ* du carbone organique du sol, ou COS. La manipulation du phénomène DM à des fins d'optimisation agronomique de la biofertilisation est à ce jour inédit.

C'est cette affinité des bactéries du sol pour le carbone sous forme de sucres simples - d'oses, a permit à De Nobili et al 2001 d'émettre la théorie dite « *trigger molecule* » (déclencheur métabolique). Selon cette théorie, telle que décrite dans Hoyle et al 2008 et De Nobili et al 2001, en absence de substrats carbonés facilement assimilables les bactéries non - sporulantes des sols arables demeurent en état *d'éveil métabolique,* ou de « veille métabolique ». Dès l'incidence de ce substrat (« food event » selon la terminologie de De Nobili et al 2001), notamment suite à l'enfouissement de résidus de culture pailleux au sol par exemple, ces bactéries s'activeront rapidement afin d'en profiter pleinement,. En d'autres mots, d'un état oligotrophique elles passent rapidement (subitement) à un état *copiotrophique.* Cette plasticité de la flore bactérienne non-sporulante, essentiellement constituée de bactéries Gram négatives - y compris les *Azotobacteraceae,* lui permet d'être à la fois rustique et opportuniste.

Rétrospectivement, cet état de « veille métabolique » à l'affut de substrats carbonés facilement assimilables n'est pas surprenant en soi. La *chimiotaxie* implique la réaction, l'induction en sorte, du métabolisme de cellules bactériennes, leur permettant de migrer activement vers une source apparente de substrat. Or, la chimiotaxie est elle aussi déclenchée par un minimum de molécules dudit substrat capable en sorte d'orienter les cellules ver cette éventuelle sources de nutriments (Alexandre et al 2000 ; Bourret *et al*. 2002). A noter donc que les concentrations de ces molécules chimio-tactiles sont du même ordre de grandeur que celles nécessaires au DM, soit de quelques ug (microgrammes) par g de sol ou ml de solution au plus, voir moins avantageusement.

### Les bactéries rhizo- et résidu-sphériques faces à la dynamique du carbone organique

L'exsudation (active) de carbone par les racines - par opposition à une libération (passive) *via* la décomposition de racines mortes, est d'environs 600 à 1 500 kg/ha/an, soit aux environs de 5 à 8 % du flux photosynthétique de la plante (Jones et al 2004) ; encore une fois, cette exsudation augmentera en présence de BFCP rhizosphériques. Or, les *rhizodépôts,* y compris donc les exsudats racinaires, disponibles et/ou effectivement captés par les bactéries du sol, sont d'un rapport C/N de 60 à 100, soit suffisant pour provoquer l'immobilisation en masse de l'azote minéral en proximité des racines (voir les données de Wichern *et al*. 2008). De plus, une partie de ce carbone et de cet azote exsudés au cours de la campagne sera récupérée par la plante elle-même, et cela au dépends des bactéries du sol. Afin de profiter éventuellement de cette source de C et de N que sont les exsudats racinaires, les bactéries du sol les plus « zymogènes » (copiotrophes) (sensu Winogradsky) ont intérêts à être « à l'affut » d'éventuels substrats carbonés dès qu'ils apparaissent comme disponibles aux racines et/ou aux bactéries.

Cela dit, en début de culture, lors de l'implantation du blé sur une période de 3 à 4 semaines, seulement 10 à 20 kg de carbone par ha seront exsudés, essentiellement qu'à partir de 8 à 12 jps (jours post-semis) ; l'activité des BFCP rhizosphériques sera limitée pendant cette période initiale (Christensen *et al*. 2002). Immédiatement après le semis, la microflore bactérienne du sol aura donc libre cour, notamment en présence de résidus de culture, d'immobiliser l'essentiel de l'azote, et du phosphore, en proximité de cette rhizosphère naissante. Bien qu'en termes agronomiques les quantités de C, N et P en jeux sont petites - une dizaine de kg de C, et quelques kg de N et P, celles-ci peuvent avoir un effet déclencheur (« triggering ») sur l'activité microbiologique dans la rhizosphère et/ou la résidusphère, de donc sur l'alimentation du jeune plantule.

Les bactéries *résidosphériques* ont donc intérêt à être en état de veille métabolique et capables de réagir à des uM (*micromoles*) de carbone en guise de déclencheurs métaboliques (DM) et profiter pleinement de Mg de carbone par ha apportés ponctuellement, notamment via l'enfouissement de résidus de culture au sol. Les bactéries plutôt *rhizosphériques* sont elles plus lente à réagir, voire plus oligotrophes, et n'ont pas à réagir aussi rapidement à de mégadoses (tonnes de C par ha), le flux photosynthétique racinaire pouvant les alimenter en carbone régulièrement et en continu.

### Carence en azote minérale (Nm) à l'automne

Du fait de la concurrence entre racines et bactéries du sol pour l'azote disponible aux racines (Hodge 2004, Hodge *et al*. 2000, Jingguo et Bakken 1997), la présence de biomasses azotobactériennes réintroduites dans la résidusphère (Claude et Fillion 2004, Harper et Lynch 1984, Halsall 1993 et Halsall et Gibson 1991) affectera le rendement des cultures. Ces biomasses azotobactériennes vont initialement prélever l'azote minéral normalement disponible aux racines et seront ainsi potentiellement contreproductives puisqu'elles provoqueront une carence en N chez la culture. Une carence en N attribuable aux *Azotobacteraceae* en début de culture affecterait la culture différemment qu'une carence en sortie d'hiver (BBCH 31). Selon Debaecke et al 1996, la croissance et le développement du blé peuvent être séparés en quatre phases ; D1 (BBCH 09-30, levée à tallage), D2 (BBCH 30-40, élongation de la tige), D3 (BBCH 41-73 - gonflement de l'épi au stade laiteux de grains) et D4 (BBCH 74-99 - maturation et récolte des grains). Une carence en N avant BBCH 41 favorisera une augmentation de l'indice de récolte, tandis qu'une carence en N imposée après BBCH 41 pénalisera plutôt le nombre de grains par épis.

Selon les données de Christensen *et al*. 1995, la stimulation *in situ* des bactéries rhizosphérique en réponse à la l'exsudation de carbone racinaire ce fera dans un délai d'environs 1 à 2 mois post semis, laissant donc amplement le temps aux bactéries résidusphériques de capter l'essentiel de l'Nm. Celles-ci immobiliseront d'autant plus d'Nm, retardant ainsi le démarrage de leurs activités diazotrophiques. L'Nm ainsi séquestré dans la résidusphère sera aussi d'autant plus éloigné de l'éventuelle rhizosphère naissante, et cela au dépends de l'alimentation en N du plantule, provoquant du coup un rationnement végétatif excessif (faim d'azote).

En situations agronomiques où les reliquats d'azote minéral (Nm) automnaux sont relativement faibles - *i.e.* d'au plus 15 mg-N par kg-sol en surface sur approximativement 20 cm, il serait donc avantageux de promouvoir la séquestration (l'immobilisation) de cet azote en proximité de la rhizosphère. En effet, en début de culture - de BBCH 00 à 31, très peu d'exsudats carbonés racinaires sont disponibles aux dites bactéries, soit de l'ordre 50 à 100 kg au plus. Ces exsudats ont des rapports C/N élevés, soit de plus de 60, et l'affinité des bactéries pour ce carbone est très élevé (Km d'environs 74uM ; Nguyen et Guckert 2001), et du coup bien supérieur à celle des racines. Or, cette activité *in proxi* pourrait s'avérer utile en ce sens qu'elle séquestre *de facto* l'Nm en proximité de la rhizosphère au dépends de la résidusphère où pourra s'effecteur d'autant plus rapidement une diazotrophie bénéfique au bilan massique C-N-P du sol.

Si nous pouvions, en présence de reliquats d'Nm automnaux peu importants, favoriser initialement la séquestration d'Nm en proximité de la semence au dépends de celui à proximité de la résidusphère, la fertilité du système sol/plante serait améliorée. Premièrement, l'appauvrissement en Nm de la résidusphère serait d'autant plus rapide favorisant l'amorçage précoce de la diazotrophie, et deuxièmement l'alimentation en N du jeune plantule serait assuré évitant ainsi un faim d'azote du fait d'un rationnement végétatif trop important.

### Excès d'Nm à l'automne

Il existe aussi des situations agronomiques où les reliquats d'N sont tels qu'il serait avantageux de favoriser la séquestration plus poussée d'Nm au sein de la résidusphère à fin d'assurer un minimum de rationnement végétatif. En effet, si les reliquats d'Nm automnaux sont importants, soit appréciablement plus que 15 à 20 mg-N par kg de sol sur approximativement 20 cm de profondeur en surface, ce trop plein d'azote pourrait nuire non seulement au démarrage précoce de la diazotrophie des *Azotobacteraceae,* mais aussi au rationnement végétatif des cultures céréalières à l'automne - notamment et selon le schéma proposé par Debaecke et al. 1996, avant et jusqu'au tout début de D2 (BBCH 30-31). En effet, une certaine carence contrôlée en N avant ce stade, et/ou définitivement avant BBCH 41 favorisera une augmentation de l'indice de récolte (IR), composante majeure du rendement en grain des céréales. Paradoxalement, donc, l'amélioration de l'état nutritionnelle de la plante en sortie d'hiver (i.e. post BBCH 35-40) que pourraient favoriser ces reliquats d'Nm importants seraient en ce sens contreproductifs. A terme, il faut même envisager que l'amélioration de l'état nutritionnelle que pourra procurer à la plante d'éventuels inocula *Azotobacteraceae* (Claude et Fillion 2004) serait elle aussi sujette à cautions en raison du re-largage de l'azote issu de la diazotrophie des *Azotobacteraceae* qui aurait lieu trop tôt - i.e. avant BBCH 41 (voir *supra*)*.* Cette amélioration de l'état nutritionnel N de la plante et du sol en sortie d'hiver pourrait donc nuire au rationnement végétatif et provoquer par la suite une certaine chute du nombre de plants par m². Cette contreperformance, notamment en absence de fertilisation raisonnée, de la biofertilisation azotobactérienne du fait d'une trop forte contribution à l'alimentation en N des cultures d'hiver aux stades végétatifs est paradoxale.

Si nous pouvions cette fois-ci - en présence de reliquats d'Nm plus importants, favoriser la séquestration de cet azote en proximité des résidus de culture pailleux au sol au profit de la résidusphère, cette menace sur le rationnement végétatif automnal de la culture et/ou le démarrage trop tardif de NIF serait réduite.

### Quelques demandes de brevets pertinentes ?

US 5 005 345 A décrit un phénomène maintenant bien connu selon lequel la complémentation en N - notamment de la *résidusphère* (*i.e*. l'environnement immédiat des résidus pailleux *in situ*) favorise (accélère) la biodégradation des pailles. Bien que US 5 005 345 A suggère l'ajoute de sucres à la formulation, l'inventeur n'a nullement ici l'intention d'omettre pour autant l'ajout d'N, ce macroélément étant ici - en accord avec l'appréciation de l'état de la technique à l'époque, toujours considéré comme essentiel à la formulation de tels produits et/ou leurs méthodes d'applications. La simple application d'oses telle que préconisée par la présente invention - par opposition à une application plus complexe et nécessaire aux yeux de la personne du métier d'une combinaison de sucres et d'autres macroéléments, n'étant aucunement considérée implicitement ou explicitement dans US 5 005 345 A**.**

*Idem* pour ce qui concerne EP 0 090 091 A1**.** Dans ce cas-ci, l'N - partie intégrante de l'invention, est en principe que progressivement (plus lentement) solubilisé au profit de la microflore du sol et de la plante. Cette dynamique avantageuse de l'N, y compris celui ainsi apporté aux résidus de culture pailleux *via* cette formulation à base de vinasses est vraisemblablement la résultante d'un certain équilibre entre l'N organique liée et l'N inorganique plus libre ; c'est - entre autres, ce rapport N organique / inorganique qui est jugée ici innovant. Enfin, en plus de sucres, la composition (cf. R1) et sa méthode d'application (cf. R9) décrites dans WO 90/02719 A1 impliquent elles aussi toutes deux l'intégration nécessaire d'N - voire au moins d'un autre macroélément.

### Définitions

**Amorçage (de la dégradation de la matière organique du sol ; AM) :** il est entendu qu'un certain apport de substrat carboné assimilable par lesdites bactéries provoque à moyen terme une utilisation, plutôt que son accumulation immédiate de la matière organique soluble, ou MOS, comme substrat carboné (Kuzyakovetal *et al*. 2002)
**Démarrage ou « déclenchage » métabolique (DM)** : il est entendu que la quantité de C minéralisé d'origine édaphique est supérieure à court terme à la quantité de substrat carboné apportée en très petites quantités, soit de l'ordre de quelques microgrammes par g de sol (De Nobili *et al*. 2001).
**Oses ou sucres simples** : Les oses, encore appelé monosaccharides ou sucres simples sont les plus simples des glucides. Ce sont de composes comportant de 3 à 8 atomes de carbone qui, sauf exception (i.e. désoxy-sucres) sont tous porteurs de fonction oxygénées. Selon le nombre de carbone ce sont des trioses, tétroses, pentoses, hexoses, etc.
**Osides** : Les osides résultent de la condensation, avec élimination d'eau, des molécules d'oses et, éventuellement, de substances non-glucidiques également. Il s'agit ici seulement d'holosides formés par la réunion de motifs exclusivement glucidiques et, par hydrolyse, ne fournissant que des oses simples (monosaccharides).
**Rationnement végétatif** : Il s'agit de la conséquence favorable sur la formation de certaines composantes du rendement telles que le nombre d'épi par m² ou encore le nombre de grains et/ou leurs poids par épi du fait de 'absence d'un excès d'azote minéral à l'automne et avantageusement jusqu'en sortie d'hiver (voir Debaecke *et al*. 1996).
**Résid*o*sphère (ou résid*u*sphère)** : Volume ou zone du sol entourant immédiatement les résidus de culture pailleux, engrais organominéraux et/ou biomasses racinaires résiduelles, et plus ou moins influencé par ceux-ci. Il est aussi question d'un « noyau » où se situe la décomposition desdits résidus de culture. A noter que les microorganismes responsables de la décomposition occupent généralement moins de 1% de l'ensemble du sol et sont particulièrement présents et actifs dans la résidusphère.

### DIVULGATION DE L'INVENTION

### Problème technique

La présence de reliquats d'Nm dans les sols à l'automne - on l'a bien compris, cause problème. Ce problème technique provient du fait que la dynamique d'immobilisation / mobilisation de l'azote minéral (Nm) dans les résidu- et rhizosphères ne sont pas nécessairement compatibles avec un fonctionnement optimal des biofertilisations azotobactériennes. En d'autres mots, il y a absence de synchronisation entre les besoins agronomiques de la culture en Nm et ceux de la flore azotobactérienne résidosphérique, i.e. en proximité des résidus de culture pailleux au sol une fois enfouis. En de telles situations les inocula azotobactériens apportés aux résidus de culture au sol (Claude et Fillion 2004) et/ou aux engrais organo-minéraux (Claude et Giroux 2006), ne pourront pleinement afficher leurs efficacités. Le défi technique consiste à trouver un moyen de stimuler cette séquestration *in proxi* par les bactéries du sol, y compris les BFCP apportées par inoculation, sans pour autant provoquer une sur-exsudation de carbone par les racines. En effet, des BFCP présentes dans la rhizosphère pourraient de cette façon ponctionner le flux photosynthétique à leur avantage et cela au dépends du bilan massique de la culture. Cela dit, l'implantation des céréales d'hivers à l'automne requiert un minimum d'Nm afin d'éviter de véritables carences en N qui pourraient remettre en question la survie hivernale des plantules. Ce minimum, ici estimé à quelques 15 mg-N / kg-sol devrait suffire en ce sens dans la mesure où ces quelques kg d'N sont en proximité des rhizosphères, ce qui est loin d'être nécessairement le cas en début de culture peu après le semis. Il faut donc ici chercher à rapprocher (*in proxi*) ces faibles reliquats d'Nm et les rhizosphères.

Bien au-delà de ce minimum en termes de reliquats automnaux d'Nm la disponibilité de l'azote peut facilement outrepasser la capacité d'immobilisation de la rhizosphère. Comme nous l'avons vu, l'exsudation de substrats à forts rapports C/N et le prélèvement (mobilisation) de l'azote par la culture à l'automne ne peuvent suffire à « éponger » d'importants reliquats d'Nm et réduire ainsi le risque ceux-ci aient polluent les nappes phréatiques et/ou nuire au rationnement végétatif de la culture. *In contrario,* les résidus de culture pailleux au sol eux peuvent au contraire immobiliser quasi complètement de faibles reliquats d'Nm automnaux provoquant ainsi la susdite carence en N de la culture d'hiver. Pourtant et en principe, le rationnement végétatif - et du coup le démarrage précoce de l'activité diazotrophe de la flore azotobactérienne du sol, sont très avantagés par la présence et l'enfouissement en surface de résidus de culture pailleux au sol. Cela dit, cet avantage que procure la valorisation microbiologique desdits résidus de culture pailleux peut être annulé par des reliquats d'azote minéral (Nm) automnaux trop importants posant eux même un risque de pollution des nappes phréatiques par les nitrates. La solution habituelle à la valorisation (lire : dégradation / décomposition accélérée) des résidus de culture pailleux au sol qui consiste à apporter une certaine quantité d'N au moment de leurs enfouissement (voir *supra* US 5 005 345 A et WO 90/02719 A1) augmentera ce risque de pollution. Or, le piégeage de ces reliquats d'Nm par des culture intermédiaires pièges à nitrates(Cipan) n'est pas ici la meilleure solution, du fait que cette immobilisation végétale des reliquats Nm sera toujours de plus longue durée que l'immobilisation microbienne de ces même reliquats ; « l'arrière effet » qu'on certains Cipan non-*Fabaceae* sur l'alimentation en N de la culture de rapport suivante est en bonne partie attribuable à cette immobilisation végétale de trop longue durée.

Dans un cas comme dans l'autre, les reliquats d'Nm - plus ou moins faibles selon le cas, doivent être immobilisés ; (i) soit vers les rhizosphères afin d'éviter des carences en N des plantules, (ii) soit vers les résiduphères afin d'assurer un rationnement végétatif des cultures. Comment donc assurer simplement cette immobilisation à « géométrie variable » d'éventuels reliquats d'Nm ?

Selon l'importance de reliquats d'Nm, il y a donc deux aspects au problème techniques ;
1. Outre la *rhizodéposition,* qui peut contribuer sur la durée de la campagne quelques 1 000 kg de carbone par hectare et par année mais très peu en début de culture, il nous faut trouver une façon simple de stimuler l'immobilisation microbienne de l'azote immédiatement au semis, et non seulement qu'en début de culture, *i.e.* y compris jusqu'à BBCH 31 mais plutôt dès BBCH 01 jusqu'à BBCH 21. Il serait en donc avantageux de séquestrer en proximité des semences l'Nm relégué au sol à l'automne.
2. Il faut aussi chercher à maximiser l'immobilisation microbienne - par toutes les espèces microbiennes confondues, d'éventuels reliquats excessifs d'Nm toujours présents dans les horizons supérieurs du sol à l'automne afin de minimiser cette atténuation du rationnement végétatif automnal, ou du moins avant le stade BBCH 41. Cette « sur-immobilisation » non seulement favorisera un démarrage plus précoce de l'activité diazotrophe (NIF) de la microflore azotobactérienne, mais aussi réduira d'autant plus les risques de pollution diffuse par les nitrates des eaux souterraines.

Le problème technique est donc double ; soit les reliquats d'Nm automnaux sont trop importants, soit ils sont trop faibles. Plus particulièrement ;
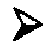 Si les reliquats d'Nm à l'automne sont trop importants, disons au minimum de l'ordre de 15 à 25 mg-N par kg-sol en surface sur 10 cm de profondeur, ils risquent non seulement de polluer la nappe phréatique, mais aussi d'atténuer le « rationnement végétatif » (Debeacke *et al*. 1996) des plantules et nuire ainsi l'indice de récolte, à la formation des puits et éventuellement au potentiel de rendement de la culture. De plus, cette surabondance relative d'Nm pouvant nuire au démarrage de l'activité diazotrophique des BFCP dans la résidosphère, il faut donc que cet azote soit immobilisé au plus tôt, avantageusement au niveau de la résidusphère. En d'autre mots, le problème technique consiste ici à assurer une *rationnement végétatif* suffisent des plantules de céréales d'hiver en dépit d'une certaine surabondance des reliquats d'azote pouvant nuire non seulement à ce rationnement végétatif, mais aussi au démarrage des *Azotobacteraceae.*
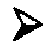 Si les teneurs en azote minéral sont trop faibles au moment du semis des cultures d'hiver. Dans ce cas, la présence de résidus de culture pailleux au sol une fois enfouis provoquera l'immobilisation de cet azote minéral déjà rare et aboutira à une sous-alimentation en N des plantules. Il y aurait intérêt dans ces cas là de séquestrer en proximité des semences - par immobilisation bactérienne s'il le faut, un maximum de cet azote avant qu'il ne le soit par l'ensemble de la flore microbienne du sol et cela au dépends immédiate et à court terme desdits plantules. Plus exactement, il s'agit d'accélérer leur démarrage afin qu'elles puissent rapidement immobiliser cet azote au niveau de la semence, et cela bien avant l'arrive des rhizodépôts qui eux dépendent de la présence et l'activité de racines établies

### Solution technique

Dans un premier cas, sans résidus de culture au sol et/ou si les reliquats automnaux d'Nm sont peu importants, les BFCP dans la rhizosphère peuvent effectivement favoriser la migration de l'azote minéral vers les racines en immobilisant celui-ci en présence de rhizo-dépôts au C/N très élevés. Cet azote immobilisé dans la rhizosphère sera éventuellement, voire rapidement, re-largué et disponible à la plante. Paradoxalement, c'est en immobilisant cet azote dans la rhizosphère et au dépends de la solution du sol que les BFCP diazotrophes et/ou non-diazotrophes peuvent favoriser à court et moyen terme l'alimentation en N de la plante et éviter des carence en N. Dans un deuxième cas, en présence de résidus de culture au sol enfouis et/ou si les reliquats automnaux d'Nm sont plus importants, les BFCP exploitant ce substrat seront-elles aussi à l'affût de cet azote minéral, et cela au dépends des BFCP *rhizosphériques* qui elles n'auront accès à cet azote qu'après les BFCP *résidusphériques,* cette séquestration d'Nm en proximité des résidus de culture pailleux favorisera le rationnement végétatif malgré une certaine abondance de N. Selon la teneur en Nm du sol à l'automne il serait avantageux de favoriser soit la séquestration d'N dans ou vers la rhizosphère (reliquats N faibles), soit vers la résidusphère (reliquats N importants). En présence de résidus de culture au sol azotobactérisés au sens de Claude et Fillion 2004, cette séquestration à géométrie variable d'Nm permettra à terme d'optimiser l'efficacité relative de ce type de biofertilisaiton.
La solution technique proposée consiste donc à moduler l'immobilisation d'Nm, soit dans la résidusphère, soit dans la rhizosphère selon la teneur en azote minéral (Nm) des sols, notamment à l'automne, et/ou la présence de résidus de culture au sol. Pour ce faire, nous pouvons mettre à contribution le phénomène de « *déclenchage* métabolique » (DM ; voir De Nobili et al. 2001) de cellules (azoto)bactériennes en état de veille métabolique à l'aide de petites quantités de glucose, ou d'un quelconque substrat carbonés équivalent, parmi un procédé selon la revendication 1. Il faut donc moduler cette immobilisation / mobilisation de l'Nm du sol à l'aide de sucres simples. Je démontre ici que cette modulation - en principe favorable aux *Azotobacteraceae in situ,* peut être accompli à l'aide de quantités restreintes - de l'ordre d'au plus quelques kg par ha, de sucres simples, voire plus simplement de sucrose. Cette stimulation de la séquestration *in proxi* d'Nm par les BFCP et/ou l'ensemble des bactéries du sol dans la rhizosphère ne nécessite donc pas l'inoculation des rhizosphères. Tout au contraire, cette stimulation constitue une alternative à cette pratique somme tout contre-productive en termes agronomiques du fait d'un coût carboné trop important attribuable à la sur-exsudation induite par ces mêmes bactéries (Lynch et Ho 2005). Cette modulation de la flore bactérienne *rhizo-* ou *résidusphèrique* - selon le cas, est aussi une alternative à l'habituel apport aux résidus de culture pailleux au sol de solutions plus ou moins azotées dans l'espoir d'en accélérer la dégradation.
Cette solution technique permet d'assurer que la rhizosphère, voire la résidosphère immédiate à la semence, soient le lieu privilégié de l'immobilisation de l'azote malgré la présence de grandes quantités de résidus de culture au sol avantageusement azotobactérisés. En effet, selon les quelques données présentées par Watt *et al*. 2006, le coefficient de diffusion, D (mm²/s) du glucose, voire du sucrose et du fructose probablement, est moindre que celui du nitrate (KNO₃). Cela contribue à expliquer pourquoi des oses et/ou osides appliqués à la surface des résidus de culture au sol contribuera à l'immobilisation de Nm en proximité de ceux-ci, au dépends de celui plus éloigné en solution. Cette immobilisation, et donc aussi l'éventuel re-largage d'N en proximité desdits résidus de culture traités au glucose et/ou au sucrose et/ou tout autre sucre simple ou facilement assimilable par les bactéries, permet d'enrichir la résidosphère en N, i.e. de réduire son rapport C/N. D'où un effet biofertilisant de ce simple apport de quelques kg/ha de tels sucres aux résidus de culture au sol.
Sur la base de l'affinité des bactéries du sol pour le glucose - soit au sens de Nguyen et Guckert 2001 un Km d'environ 74 uM, soit approximativement du même ordre de grandeur que la molarité du glucose dans la solution du sol telle que rapportée par Hill et al. 2009 (54 uM), j'ai estimé que pondéralement ce glucose représente environ 200 à 400 g par hectare de résidus de culture pailleux au sol enfouis en surface du sol sur approximativement 10 à 15 cm de profondeur, soit environ 10⁷ g de tels résidus pailleux pour quelques 1 000 m³ de sol ainsi amendé. A noter en ce sens que seulement 20 à 25% du volume d'un sol arable est aqueux, et que la densité apparente des résidus de culture pailleux est généralement de 3 à 5 fois plus faible que celle du sol environnant ; ces résidus de culture occupe donc près de 4 à 5 % du volume du sol, bien qu'ils ne représentent que 1% de sa masse.

Or, le temps de résidence d'une quelconque molécule de glucose dans le sol étant probablement assez court - de l'ordre de la minute selon Hill et al. 2009 par exemple, pour assurer la présence immédiate de telles concentrations de glucose dans la solution du sol des apports exogènes sont donc effectivement à considérer au sens de la présente invention. Ces apports devront cependant tenir compte que le volume et la masse de la solution du sol ne représente que 25 à 30 % du sol, et qu'il y aura des pertes - par consommation et/ou fixation des oses lors de leurs formulation et pulvérisation *in situ.* Donc, et à ce stade de développement de la présente technologie, j'estime que pour affecter ces micro-molarités d'ose *in situ* de l'ordre donc de 50 à 100 uM il faut que les dose-hectares d'oses/osides au sens de la présente invention soient de l'ordre du (d'un) kg par hectare, soit approximativement ce qu'impliquèrent Eiler et al. 2003 et Griffiths et al. 1999, mais aussi - paradoxalement, une bonne ordre de grandeur plus faible que celles rapportées par De Nobili et al. 2001, pourtant instigateurs de la théorie des « trigger molecules ». Cela dit, une des mise au point à apporter lors de la réalisation industrielle et agronomique de la présente invention sera d'établir la formulation de ces oses et/ou osides de façon à réduire lesdites pertes, par exemple en peaufinant la granulométrie et/ou l'ajout de certains agents de conservation, ou encore en choisissant une source d'ose/oside bon marché issue d'un sous-produit industriel. En ce sens, il est envisageable de réduire la dose-hectare d'oses/osides à aussi peu que 100 g (0,1 kg).

La solution technique consiste donc en une application aux résidus de culture pailleux au sol ou aux semences - selon le cas, avant le semis de grandes cultures non-légumineuses de sucres (oses) simples ou d'osides capables de les générer facilement par hydrolyse et dont les doses par hectare équivalent à entre 0,1 et 5 kg, plus particulièrement entre 0,4 et 2,5 kg, et avantageusement à 1 kg. Ces oses ou osides sont appliqués aux résidus de culture pailleux au sol en pré-semis de grandes cultures d'hivers non-légumineuses, avantageusement selon Claude et Fillion 2004, si les reliquats d'azote minéral dans les sols sont importants, soit compris entre 10 et 70, plus particulièrement entre 25 et 60, et avantageusement d'environs 35 mg-N par kg de sol sur approximativement 20 cm de profondeur (i.e. en surface de la couche arable) du sol. Ces sucres (oses) simples ou d'osides sont appliqués aux semences de grandes cultures d'hivers non-légumineuses si les reliquats d'azote minéral dans les sols à l'automne ne sont pas importants, soit compris entre 0 et 30, plus particulièrement entre 10 et 25, et avantageusement d'environ 15 mg-N par kg de sol sur approximativement 20 cm de profondeur du sol. Lesdites grandes cultures non-légumineuses d'hivers sont elles choisies parmi un groupe comprenant le blé, l'orge, l'avoine, le seigle, le triticale, le colza et le lin. De plus, il est loisible que lesdits résidus de culture pailleux au sol et semences soient bactérisés à l'aide d'une dose-hectare de biomasses *Azotobacteraceae* obtenues expressément à cet effet contenant entre 1 x 10¹² et 1 x 10¹³, voire plus avantageusement 5 x 10¹² cellules viables et correctement formulées et conditionnées. Il s'agit donc de biofertilisants azotobactériens impliquant l'application de sucres (oses) simples ou d'osides aux résidus de culture pailleux au sol ou au semences de grandes cultures non-légumineuses d'hiver permettant d'immobiliser temporairement au profit de l'élaboration du rendement de la culture les reliquats d'azote minéral à l'automne en surface des sols.

La solution technique est aussi applicable à toute forme de biofertilisation (azoto)bactérienne pour culture non-légumineuses capable d'influencer la répartition d'Nm entre les racines et les résidus de culture. Cependant, du fait du protocole d'obtention ayant servit à leurs isolement, les souches dites AZB au sens de FR 01/15542 sont particulièrement avantageuses. Les souches bactériennes ainsi retenues en présence d'un calque de la microflore et des complexes argilo-humiques du sol à la surface des gels siliciques le sont avec un minimum de carbone dissout, soit envions 1/10 celui normalement présent dans le sol. En effet, celles-ci sont en principe très sensibles aux DM (*déclencheage* métabolique) du fait d'avoir été expressément sélectionnées en condition *oligotrophiques* et avant d'avoir été transférées à des milieux de culture relativement riche en carbone assimilable.

### Avantages apportés, nouveauté et activité inventive

L'invention concerne donc l'application, avant le semis de grandes cultures non-légumineuses (non-Fabaceae) d'oses ou d'osides capables de les générer par hydrolyse, aux résidus de culture pailleux au sol ou aux semences, selon le cas. En ce sens, l'invention n'implique pas l'intégration d'azote (N), ou tout autre macroélément (*macronutrient composent* ; WO 90/02719 A1), y compris notamment l'azote **(**US 5 005 345 A et EP 0 090 091 A1**).** Or, c'est précisément cette omission (suppression) qui est étonnante et non-évidente pour la personne du métier cherchant à promouvoir la dégradation précoce (accélérée) des résidus de culture pailleux in situ **(**US 5 005 345 A et/ou EP 0 090 091 A1), ou encore favoriser l'assimilation immédiate de squelettes carbonés (« carbon skeletons », WO 90/02719 A1) par la plante. A noter ici que la susdite cinétique de dégradation plus ou moins rapide (précoce) des résidus de culture pailleux au sol n'est pas limitative que dans la mesure où elle impacte négativement l'alimentation en azote de la culture. Il ne s'agit donc pas - du moins en agronomie, de favoriser à tout prix la disparition desdits résidus pailleux (aussi bien les brûler dans ce cas), mais bien de favoriser la captation des reliquats d'azote automnaux et favoriser du coup la rationnement végétatif de la plante, et/ou dans un deuxième temps la libération (re-largage) de cet azote dès la sortie d'hiver.

Cette omission (suppression) volontaire de l'N de la formulation appliquée en proximité de la *rhizosphère* - *via* les semences, ou de la *résidusphère* - *via* les résidus de cultures pailleux au sol, respectivement selon le cas, est nouvelle et contre-intuitive. En effet, l'alimentation en N et/ou en P (phosphore) des plantules, voire de la microflore bactérienne du sol est généralement perçue par l'homme du métier comme la ou les plus limitant. La présente invention réside donc dans le fait que la suppression de cet élément qu'est l'N ou tout autre macroéléments, au sens de la R1 de WO 90/02719 A1 par exemple, comporte un effet inattendu en ce sens que l'utilité agronomique d'une telle préparation est très susceptible d'être maintenue, les reliquats automnaux d'Nm pouvant maintenant être d'autant plus reportés (transmis par *sur-immobilisation* microbienne) au profit de la campagne suivante. En effet, la sélection d'une des composantes - les susdits oses et/ou osides, au dépends des autres composantes de compositions plus complexes destinées à la valorisation microbiologique de résidus de culture pailleux ou de l'environnement immédiate des rhizosphères émanant de semences, est non-évidentes, ces autres composantes ayant été à ce jour considérées comme les plus essentiels, les susdit oses/osides étant plutôt considérés comme de simples *coformulants.* L'utilité agronomique de l'invention découle maintenant du fait que l'N omis (supprimé) de la formulation est aussi reconnu comme facteur de pollution d'origine agricole.

L'Invention permet d'assurer un certain équilibre entre le démarrage de la culture et son rationnement végétatif à l'automne, tout en assurant que le passage en mode *diazotrophique* de la résidusphère ne soit pas compromis ou inutilement différé. L'Invention ne préconise pas nécessairement la bactérisation des semences ; ne comportant pas d'inoculation, les substances impliquées sont simples, robustes et facilement utilisables. Enfin, cela dit l'invention et parfaitement réconciliable avec une azotobactérisation des résidus de culture au sol, et pourra même en augmenter l'efficacité agronomique relative.

### BRÈVE DESCRIPTION DES DESSINS ET FIGURES (na)

### MODE DE RÉALISATION PRÉFÉRÉ DE L'INVENTION

L'invention est préférablement destinée à l'optimisation de la biofertilisation azotobactérienne, notamment en présence de résidus de culture pailleux au sol en pré-semis d'une céréale d'hiver, voire le cas échéant d'une culture intermédiaire pièges à nitrate (Cipan). Il est comme de raison préférable que ces résidus de culture pailleux et biomasses provenant des Cipan soient les plus abondants possibles. Il est aussi loisible que lesdits résidus de culture pailleux au sol et semences soient bactérisés à l'aide d'une dose-hectare de biomasses *Azotobacteraceae* obtenues expressément à cet effet - avantageusement selon le protocole d'obtention décrit dans, par exemple, FR 01/15542, produites par fermentation à l'état solide selon une approches décrite dans FR 06/00014, et correctement formulées et conditionnées, avantageusement selon l'approche décrite dans FR 05/05753. En absence de résidus de culture pailleux au sol, l'invention pourra avantageusement être destinée au pelliculage de semences, notamment de cultures d'été telles que le maïs, le sorgho, le tournesol, voire une quelconque céréale de printemps.

### APPLICATIONS BIOINDUSTRIELLES ET AGRONOMIQUES

L'invention sera applicable à l'agriculture (agronomie) si de micro-doses - i.e. de l'ordre de quelques microgramme (ug) d'ose par g de sol peuvent effectivement amplifier cette dynamique d'immobilisation microbienne ↔ mobilisation végétale de l'N, et plus particulièrement des reliquats d'Nm présents à l'automne au moment du semis. Cette amplification de la susdite dynamique à l'aide de telles micro-doses d'oses est ici dite synonyme de *déclencheage métabolique* (DM) des flores (azoto)bactériennes, soit rhizo - soit résidusphériques. A noter qu'ici les essais en serre concernent que les microflores bactériennes résidusphériques ; à la vue de l'état de la technique et de la solution technique proposée, l'applicabilité de l'invention à la résidusphère présuppose nécessairement sont applicabilité à la rhizophère.

### 1^{ier} essai en serre

Il s'agit donc d'appliquer des micro-doses d'oses aux résidus de culture pailleux au sol en présence de leurs microflores microbiennes, c'est-à-dire ici d'applications de l'équivalent de 1 kg par hectare aux résidus de culture pailleux au sol ou aux semences - selon le cas avant le semis de grandes cultures non-légumineuses de sucres (oses) simples ou d'osides capables de les générer facilement par simple hydrolyse.

Pour d'fin d'illustration de l'invention - dite « OSE », nous avons choisi un oside - le sucrose, facilement hydrolysable en oses *in situ* via l'action de bactéries de la famille des *Azotobacteraceae.* A cinq (5) g de résidus de culture pailleux (blé) séchés passivement à température ambiante, hachés et tamisés (2 mm) nous avons apporté 1 mg de sucrose via 5 mL d'une solution de sucrose d'un (1) g par L, soit ici l'équivalent d'une dose-hectare de 0,6 à 1 kg de sucrose, un hectare de sol arable en surface sur 10 cm de profondeur contenant approximativement 10⁹ g de sol.

Les résidus de culture pailleux (blé) ont été intégrés au sol sec et tamisé (4 mm) par malaxage, ce mélange résidus pailleux / sol (1% p/p) étant par la suite placé dans des pots (1 L) sur soucoupes disposés systématiquement en serre en carré latin. J'ai par la suite établit un essai phytogène en serre et en pots contenant chacun 500 g de sol reconstitué, sec et tamisé à 4 mm (Tableau A ; deux types de sols sont présentés - voir infra 2^{ième} essai en serre), et comportant six (6) modalités avec du *Lolium multiflorum (nb.* 1 g de semence à la surface de chaque pot) ;
1. un témoin sans résidus de culture pailleux, sans Nm complémentaire
2. un témoin sans résidus de culture pailleux, avec Nm complémentaire
3. avec OSE sans azote minéral (Nm) complémentaire
4. sans OSE sans azote minéral (Nm) complémentaire
5. avec OSE avec azote minéral (Nm) complémentaire
6. sans OSE avec azote minéral (Nm) complémentaire

**TABLEAU A : Analyse physico-chimique des sols alsaciens utilisés pour les 1^{ier} et 2^{ième} essais**

| | **1^{ier} essai** | **2**^{ieme} **essai** |
|---|---|---|
| CEC (cmol) | 121 | 108 |
| pH | 6,7 | 6.6 |
| MO (%) | 1,84 | 2.15 |
| P₂O₅ (Dyer) | 0,190 | 0.250 |
| P₂O₅ (Joret-Hebert) | 0.069 | na |
| Texture A-L-S (g/kg-sol) | 218-673-84 | 211-711-78 |
| K₂O (g/kg-sol) | 0,12 | 0.11 |
| MgO (g/kg-sol) | 0,16 | 0.14 |
| CaO (g/kg-sol) | 3,2 | 3.14 |
| Na₂O (g/kg-sol) | 0,025 | 0.01 |
| Fe (mg/kg-sol) | 73,3 | 98.3 |
| Mn (mg/kg-sol) | 28,7 | 15.1 |
| Zn (mg/kg-sol) | 2,8 | 1.4 |
| Cu (mg/kg-sol) | 2,5 | 2.4 |
| B (mg/kg-sol) | 0,44 | 0.27 |

Chacune des modalités furent répétées 6 fois et disposées systématiquement au sein d'un dispositif en carré latin pour 56 jours, soit suffisamment longtemps pour permettre deux coups successives - c1 et c2 à 28 jours d'intervalle. Au semis, les modalités avec Nm complémentaire reçurent l'équivalent de 15 mg-N / kg-sol sous forme de nitrate d'ammonium via une solution nutritive (Tableau B).

**TABLEAU B : Préparation des solutions nutritives avec et sans N**

| **Quatre solutions molaires (1M) pour les apports de N/P/K/S/Mg** ; | |
|---|---|
| 1. Ca(NO₃)₂.4H₂O | 236.1 g/l |
| 2. KNO₃ | 101.1 g/l |
| 3. KH₂PO₄ | 136.1 g/l |
| 4. MgSO₄.7H₂O | 246.5 g/l |

| **Deux solutions oligo-élémentaire, soit pour 1 L** ; | |
|---|---|
| FeSO₄.7H₂O | 7.8 g |
| H₃BO₃ | 2.8 g |
| MnCl₂.4H₂O | 1.8 g |
| ZnSO₄.7H₂O | 0.2 g |
| CuSO₄.5H₂O | 0.1 g |
| NaMoO₄ | 0.025 g |
| FeSO₄.7H₂O | 0.0078 g |

| **Pour prépare 1 L de solution nutritive** ; | |
|---|---|
| 7 ml Ca(NO₃)₂ | |
| 5 ml KNO₃ | |
| 2 ml KH₂PO₄ | |
| 2 ml MgSO₄ | |
| 1 ml oligo-éléments (avec Mo) | |

Immédiatement après la première coupe (c1) 28 jours post-semis en prévision d'une seconde coupe (c2) 56 jours post-semis - et afin d'éviter des carences trop importantes pouvant remettre en question la santé et la croissance même des plantules sur modalités sans Nm complémentaire, toutes les modalités reçurent 15 mg-N / kg-sol ; les modalités avec Nm complémentaire reçurent en plus un autre 35 mg-N / kg-sol.

Les *matières sèches des parties aériennes* (MSPA ; g/pot), ainsi que la *mobilisation de l'azote* (MOBN ; mg-N/pot) par ces MSPA furent par la suite déterminés. J'ai effectué en deux temps les analyses de variances (Anova) de ces données. Dans un premier temps en incluant les six (6) modalités dans l'Anova et la comparaison des moyennes à l'aide de plus petites différences significatives (α = 5%) - LSD (*least significant differences* selon leur appellation habituelle).

En ce sens, au Tableau I nous voyons que les MSPA produites en présence (avec) d'OSE au sens de la présente invention sont - par rapport aux témoins sans résidus de culture pailleux, significativement plus petites ; ceci n'est pas le cas des MSPA produites en absence (sans) d'OSE. Cette réduction applicable aux MSPA l'est aussi pour les MOBN (Tableau I), bien qu'ici non-significativement à ce stade.

A noter aussi l'effet vraisemblablement positif mais peu important (non-significatif) de l'apport des quelques 15 mg-N / kg-sol au semis en guise de reliquats d'azote. Cette absence d'effet notable de l'azote ainsi apporté est vraisemblablement attribuable à la présence d'importants reliquats indigènes d'N capables - ici et à ce stade, de masquer l'effet de cet apport d'azote en guise de reliquats d'Nm.

**Tableau I : Synthèse des comparaisons multiples (Fisher-LSD, α = 5%) pour les valeurs moyennes de MSPA et de MOBN 28 jours post-semis (c1).**

| Modalité | MSPA (g/pot) | Groupes | |
|---|---|---|---|
| témoin sans RC avec Nm | 1,835 | A | |
| témoin sans RC sans Nm | 1,797 | A | |
| RC sans OSE avec Nm | 1,610 | A | B |
| RC sans OSE sans Nm | 1,560 | A | B |
| **RC avec OSE avec Nm** | **1,455** | | **B** |
| RC avec OSE sans Nm | 1,330 | | B |
| | | | |

| Modalité | MOBN (mg-N/pot) | Groupes | |
|---|---|---|---|
| témoin sans RC avec Nm | 21,103 | A | |
| témoin sans RC sans Nm | 20,662 | A | |
| RC sans OSE avec Nm | 13,202 | | B |
| RC sans OSE sans Nm | 12,792 | | B |
| **RC avec OSE avec Nm** | **11,786** | | **B** |
| RC avec OSE sans Nm | 10,773 | | B |

Dans un deuxième temps, et afin d'éviter de confondre lors de l'Anova l'impacte relativement important des résidus de culture en soi et celui beaucoup plus discret d'OSE, j'ai retiré de l'analyse les témoins sans résidus de culture pailleux ne laissant que les 4 modalités avec résidus de culture ; l'Anova en question s'effectue donc maintenant sur la base d'un dispositif en blocs Fisher (i.e. *randomized complet bloc design* selon son appellation anglaise) avec six (6) répétitions de ces 4 modalités restantes, la comparaison des moyennes pour ce modalités étant toujours effectives à l'aide d'une LSD calculée (α = 5%).

Selon ce deuxième type d'Anova, l'impacte des DM est toujours essentiellement peu/pas significative 28 jps (c1 ; Tableau II), mais le devient fortement dès 56 jps (c2 ; Tableau III), du moins en termes de MOBN, la MSPA étant elle moins affectée.

**Tableau II : Synthèse des comparaisons multiples (Fisher-LSD, α = 5%) pour les valeurs moyennes de MSPA et de MOBN 28 jours post-semis (c1) ; Nb. seules les modalités avec résidus de culture pailleux (RC) sont ici incluses dans l'Anova.**

| Modalité | MSPA (g/pot) | Groupes | |
|---|---|---|---|
| RC sans OSE avec Nm | 1,610 | A | |
| RC sans OSE sans Nm | 1,560 | A | B |
| **RC avec OSE avec Nm** | **1,455** | **A** | **B** |
| RC avec OSE sans Nm | 1,330 | | B |
| | | | |

| Modalité | MOBN (mg-N/pot) | Groupes | |
|---|---|---|---|
| RC sans OSE avec Nm | 13,202 | A | |
| RC sans OSE sans Nm | 12,792 | A | B |
| **RC avec OSE avec Nm** | **11,786** | **A** | **B** |
| RC avec OSE sans Nm | 10,773 | | B |

A noter qu'à ce stade l'impacte des 35 mg-N /kg-sol apportés dès 28 jps après la récolte de c1 est maintenant très significative, vraisemblablement du fait d'une très importante (im)mobilisation depuis de l'ensemble des reliquats d'N, y compris des 15 mg-N / kg-sol apportés au semis.

**Tableau III : Synthèse des comparaisons multiples (Fisher-LSD, α = 5%) pour les valeurs moyennes de MSPA et de MOBN 56 jours post-semis (c2) ; Nb. seules les modalités avec résidus de culture pailleux (RC) sont ici incluses dans l'Anova.**

| Modalité | MSPA (g/pot) | Groupes | | |
|---|---|---|---|---|
| RC sans OSE avec Nm | 2,732 | A | | |
| **RC avec OSE avec Nm** | **2,665** | **A** | | |
| RC sans OSE sans Nm | 0,625 | | B | |
| RC avec OSE sans Nm | 0,605 | | B | |
| | | | | |

| Modalité | MOBN (mg-N/pot) | Groupes | | |
|---|---|---|---|---|
| **RC avec OSE avec Nm** | **22,653** | **A** | | |
| RC sans OSE avec Nm | 21,853 | | B | |
| RC sans OSE sans Nm | 4,312 | | | C |
| RC avec OSE sans Nm | 4,175 | | | C |

Ce qu'il est important de noter ici - et contrairement à ce qui a été détecté 28 jps ou encore en absence d'azote apporté, c'est que c'est avec OSE que MOBN est la plus grande, et non sans (Tableau II). L'azote vraisemblablement sur-immobilisé jusqu'à 28 jps du fait de l'action des micro-doses d'oses au sens de la présente invention - et donc du démarrage métabolique (DM) précipité de la flore azotobactérienne d'où une certaine réduction de MSPA (Tableau I), voire de MOBN, est maintenant re-largué au profit des plantules (Tableau III). A noter encore une fois que ce re-largage est ici détectable qu'en présence d'apports d'azote - i.e. 15 mg-N au semis et 35 mg-N 28 jps par kg-sol, en guise de simulation d'importants reliquats automnaux d'azote.

Pour faire simple, disons que sans d'importants reliquats d'azote - ici à hauteur de 15 plus 35 - dans un deuxième temps, kg-N / kg-sol, l'effet d'OSE provoqué par l'apport de micro-doses de sucrose - soit ici l'équivalent d'environs 4 kg par hectare, n'est pas apparent ; **avec, si.** Le DM permet effectivement d'immobiliser plus de reliquats. Cette sur-immobilisation d'N peut donc être mise à profit lors de la valorisation microbiologique des résidus de culture au sol en situations où les reliquats sont excessifs, i.e. généralement d'au moins 15 à 25 kg-N/ha sur ∼ 10 cm de couche arable. Cette sur-immobilisation peut aussi être avantageuse en situations contraire où les reliquats automnaux sont trop faibles, i.e. généralement d'au plus 15 kg-N/ha sur ∼ 10 cm de couche arable, et risqueraient donc d'entraîner une carence en N des plantules de céréales d'hiver ; les DM sont dans ce cas appliqués aux semences.

Or, et contre intuitivement, cette sur-immobilisation d'N peut être appliquée à l'agriculture ;
i) Elle permet de capter, à l'automne, une plus grande part des reliquats d'azote réduisant ainsi les risques de pollution des nappes par lessivage des nitrates.
ii) Cette captation accrue des reliquats d'N contribuera à un meilleur rationnement végétatif des plantules à l'automne, et donc à l'augmentation du potentiel de rendement via une augmentation du nombre d'épi par m² et/ou du nombre de grains (ou de leur poids) par épi dès la sortie d'hiver.
iii) Cette captation des reliquats - outre le fait qu'ils seront éventuellement relarguer au profit de la plante dès la sortie d'hiver, contribue à abaisser les teneurs en N minéral du sol à l'automne en dessous des seuils au-delà desquels l'activité diazotrophique des *Azotobacteraceae* est inhibée par une certaine rétroaction négative.

A noter que c'est l'équivalent d'environs 50 (15 + 35) mg-N par kg-sol qui furent misent à la disponibilité de la microflore bactérienne de la résidosphère stimulée par l'apport du sucrose en guise de DM ; sans cette sur-disponibilité d'azote apporté, ce sucrose ne semble pas agir lorsqu'appliqué aux résidus de culture pailleux au sol. C'est donc bien au niveau de l'azote disponible, et de son prélèvement par ladite microflore qu'agit ce DM par l'entremise d'OSE. Dans quelle mesure au champ cette azote sur-immobilisée dès le semis en réponse à l'action d'OSE pourra provoquer une montée en puissance de la diazotrophie reste à déterminer.

Ce qu'il faut ce rappeler ici c'est que ce déclenchage métabolique (DM) de la microflore résidosphérique ce fait par l'entremise d'une relativement petite quantité de sucres - ici du sucrose, un oside pouvant rapidement libérer des oses, et que l'azote minéral ainsi immobilisé est susceptible d'être valorisée en agronomie du fait de son re-largage éventuel ; de plus, cette « sur-immobilisation temporaire de l'azote favorise la diazotrophie résiduphérique.

Or, étant donnée la présence de reliquats d'azote importants - et cela en sus des 15 mg-N / kg-sol apportés au semis, j'ai voulu confirmer cette avantageuse dynamique de (sur)immobilisation / re-largage de l'azote ainsi reporté et a priori attribuable à l'action d'OSE. En ce sens j'ai réalisé un 2^{ième} essai en serre et utilisé cette fois-ci un sol dépourvu de reliquats indigènes d'azote et ici sciemment remplacés par un apport précis de 25 mg-N / kg-sol, soit un reliquat automnal d'azote important mais fréquents, surtout en production intensive de céréales de printemps - de maïs notamment, voir d'automne si le pilotage intra-saisonner des apports d'engrais N est défaillant et donc incapable d'éviter le surdosage d'engrais azotés.

### 2^{ième} essai en serre

Pour confirmer ce re-largage de l'azote minéral ainsi sur-immobilisé du fait d'un DM attribuable à l'application d'OSE - i.e. 10³ g-glucose par hectare (10⁹ g-sol) par opposition à quelques 10⁷ g de résidus de culture pailleux au sol par hectare), j'ai simplement repris ces deux modalités - avec et sans l'application d'OSE au sens de la présente invention, en présence de résidus de culture pailleux (1% p/p de sol ; voir le 1^{ier} essai) répétés cinq (5) fois au sein d'un dispositif en bloc Fisher 2 x 5. Les caractéristiques du type de sol utilisé pour ce 2^{iène} essai sont rapportées au Tableau A. A noter que les teneurs en P_{Dyer} sont supérieures à celles du sol utilisés pour le 1^{ier} essai, d'où une plus grande fertilité et teneur en N des MSPA ainsi produites. Du coup, j'ai démontré encore une fois un certain effet dépressif (rationnement végétatif) d'OSE sur MSPA et MOBN à c1 (28 jps ; Tableau IV) vraisemblablement attribuable à ladite sur-immobilisation tant recherchée, suivi - dès c2 (56 jps ; Tableau IV) d'un certain effet positif sur MOBN.

**Tableau IV : Matières sèches des parties aériennes (MSPA) et leurs mobilisations de l'azote (MOBN) 28 et 56 jours post-semis avec est sans l'apport d'un minimum d'osides aux résidus de culture pailleux au sens de la présente invention (OSE).**

| | MSPA (mg / plant) | | | |
|---|---|---|---|---|
| récolte ; | témoin (t) | OSE | OSE / t | P-Dunnett (t = 1,00) |
| c1 28 jps | 7,57 A | 6,95 A⁽¹⁾ | 0,92 | 0,33⁽²⁾ |
| c2 56 jps | 19,4 A | 18,4 AB | 0,95 | 0,52 |
| c1+c2 | 26,9 A | 25,4 AB | 0,94 | 0,44 |
| | | | | |

| | MOBN (ug / plant) | | | |
|---|---|---|---|---|
| récolte ; | témoin (t) | OSE | OSE / t | P-Dunnett (t = 1,00) |
| c1 28 jps | 71,1 A | 62,6 AB | 0,9 | 0,13 |
| c2 56 jps | 230 AB | 241 A | 1,05 | 0,04 |
| c1+c2 | 301 AB | 304 A | 1,01 | 0,14 |

| | | | | |
|---|---|---|---|---|
| **Note 1 :** Fisher LSD (5%) pour une même récolte ou leur somme ; Anova carré latin 5x5 c1, c2 et c12 **Note 2 :** Dunnett rapport à témoin = 1,00 pour une même récolte ou leur somme ; Anova carré latin 4x4 c1, c2 et c12 | | | | |

Ce regain de MOBN dès c2 56 jps en présence d'OSE est nécessairement attribuable au re-largage de cet azote précédemment sur-immobilisé par la flore (azoto)bactérienne environnant les résidusphères, i.e. les résidus de culture pailleux in situ en cour de décomposition sur lesquels les quelques 10³ g-glucose pour 10⁹ g-sol ont été appliqués au sens de la présente invention (OSE).

Pour compléter cette illustration de l'applicabilité d'OSE, j'ai compilé au Tableau V les %Nₜₒₜₐₗ des MSPA - pour le 1^{ier} et le 2^{ième} essai en serre et qui comme de raison ont déjà servis au calcul de MOBN. A noter que - et cela pour ce qui est des deux essai ici en guise de comparaison, le vraisemblable DM des flores (azoto)bactériennes via l'application d'OSE au sens de la présente invention diminue dans un premier temps (i.e. dès c1) ce %N des MSPA par rapport au témoins sans OSE, et l'augmente significativement par après, i.e. dès c2 (Tableau V).

**Tableau V : Teneur en azote (Nₜₒₜₐₗ) des matières sèches des parties aériennes (MSPA) 28 et 56 jours post-semis avec et sans l'apport d'un minimum d'osides aux résidus de culture pailleux au sens de la présente invention (OSE).**

| | %Nₜₒₜₐₗ MSPA | | | |
|---|---|---|---|---|
| récolte ; | essai ; | sans OSE | avec OSE | avec/sans |
| c1 28 jps | 1ier | 0,82 | 0,81⁽¹⁾ | 0,99^{ns} |
| c2 56 jps | 1ier | 0,8 | 0,85 | 1,06* |
| c1 28 jps | 2ième | 0,94 | 0,9 | 0,96* |
| c2 56 jps | 2ième | 1,19 | 1,31 | 1,10** |

| | | | | |
|---|---|---|---|---|
| **Note 1 :** Précision analytique selon les données provenant de comparaisons inter-laboratoire - 0,04% | | | | |

Encore une fois, OSE permit de transférer l'azote sur-immobilisé 28 jps (c1) vers la MSPA produites à un stade ultérieur - 56 jps (c2). Ce report d'azote est avantageux parce qu'il est susceptible d'être appliqué en agronomie ; la sur-immobilisation à c1 étant en principe assimilable à un rationnement végétatif d'une grande culture céréalière à l'automne, tandis que le report d'azote vers c2 lui est assimilable à une amélioration de l'état nutritionnelle en sortie d'hiver. Dans le cadre d'une fertilisation raisonnée avec pilotage intra-saisonnier des apports d'engrais N, cette amélioration de l'état nutritionnel de la culture ce traduira par une amélioration de l'efficacité pondérale des engrais N apportés, voire éventuellement de biofertilisation azotobactériennes.

### Références, bibliographie et brevets pertinents

Alexandre, G., S. E. Greer, et I.B. Zhulin. 2000. Energy Taxis Is The Dominant Behavior In Azospirillum Brasilense. J. Bacteriol., Nov. 2000, P. 6042-6048 Vol. 182, No. 21
Baltensperger, A. A., S. C. Schank, Rex L. Smith, R. C. Littell, J. H. Bouton, and A. E. Dudeck Effect of Inoculation with Azospirillum and Azotobacter on Tuff-type Bermuda Genotypes. Crop Sci. 1978 18: 1043-1045.
Blagodatskaya, E.V., S.A. Blagodatsky, T.-H. Anderson, Y. Kuzyakov. 2007. Priming effects in Chemozem induced by glucose and N in relation to microbial growth stratégies. Appl. Ecol. 37 :95 - 10 5
Brewin, B., P. Woodley et M. Drummond. 1999. The Basis of Ammonium Release in nifL Mutants of Azotobacter vinelandii. J. Bacteriol. 1999 181: 7356-7362
Bourret, R. B. N.W. Charon, A.M. Stock et A.H. West. 2002. Bright lights, abundant operons-fluorescence and genomic technologies advance studies of bacterial locomotion and signal transduction. The BLAST Meeting, Cuernavaca, Mexico, 14 To 19 January 2001. J. Bacteriol. 184 : 1-17.
Christensen, H. 1995. Bacterial production determined by [3H]thymidine incorporation in field rhizospheres as evaluated by comparison to rhizodeposition. Soil Biol. Biochem. 27 : 93-99.
Claude, P-P. et M. Giroux. 2006. Effet des engrais organo-minéraux inoculés (EOMI) sur la croissance des plants de maïs-grain, les rendements, les prélèvements des éléments nutritifs et la qualité des grains. Agrosolutions 17 : 51-64.
Claude, P-P. et L. Fillion. 2004. Effet de l'apport d'un Inoculum bactérien aux résidus de culture de maïs-grain au Sol sur le rendement et la qualité de blés d'hiver panifiables en France. Agrosolutions 15(1) : 23-29.
De Nobili, M., M. Contin, C. Mondini, P.C. Brookes. 2001. Soil Microbial Biomass Is Triggered Into Activity By Trace Amounts Of Substrate Soil Biology & Biochemistry 33 : 1163-1170
Debaeke, Ph., M Cabelguenne ML Casals et J Puech 1996. Élaboration du rendement du blé d'hiver en conditions de déficit hydrique. II. Mise au point et test d'un modèle de simulation de la culture de blé d'hiver en conditions d'alimentation hydrique et azotée variées : Epiephase-Blé. Agronomie 16:25-46
Dilly, O., H.-J. Bach, F. Buscot, C. Eschenbach, W.L. Kutsch, U. Middelhoff, K. Pritsch, J.C. Munch. 2000. Characteristics And Energetic Stratégies Of The Rhizosphere In Ecosystems Of The Bornhöved Lake District. Applied Soil Ecology 15 (2000) 201-210
Eiler, A, S. Langenheder, S. Bertilsson, et L.J. Tranvik. 2003. Heterotrophic Bacterial Growth Efficiency and Community Structure at Different Natural Organic Carbon Concentrations. Appl. Environ. Microbiol. 69 : 3701-3709
Engelking, Brigitte, Heiner Flessa, et Rainer Georg Joergensen. 2007. Microbial use of maize cellulose and sugarcane sucrose monitored by changes in the 13C/12C ratio. Soil Biol. Biochem. 39 : 1888-1896
Falchini, L. N. Naumova, P.J. Kuikman, J. Bloem, P. Nannipieri. 2003. CO2 evolution and denaturing gradient gel electrophoresis profiles of bacterial communities in soil following addition of low molecular weight substrates to simulate root exudation. Soil Biol. Biochem. 36 : 775-782
Fontaine, S., G. Bardoux, D. Benest, B. Verdier, A. Mariotti, et L. Abbadie. 2004. Mechanisms of the Priming Effect in a Savannah Soil Amended with Cellulose. Soil Sci. Soc. Am. J. 68:125-131.
Griffiths, B.S., K. Ritz, N. Ebblewhite, G. Dobson. 1999. Soil microbial community structure: Effects of substrate loading Rates. Soil Biol. Biochem. 31 : 145-153
Halsall, D.M. 1993. Inoculation of wheat straw to enhance lignocellulose breakdown and associated nitrogenase activity. Soil Biol. Biochem., 25, Issue 4 : 419-429
Halsall, D.M. and A.H. Gibson . 1991. Nitrogenase activity (C2H2 réduction) in straw-amended wheat belt soils in response to diazotroph inoculation. Soil Biol. Biochem. 23 : 987-998
Hamer, Ute et Bernd Marschner. 2005. Priming effects in différent soil types induced by fructose, alanine, oxalic acid and catechol additions. Soil Biol. Biochem. 37 : 445-454
Hamer, U. et B. Marschner. 2005. Priming effects in soils after combined and repeated substrate additions. Geoderma 128 : 38- 51
Harper, S.H.T. et J.M. Lynch. 1984. Nitrogen fixation by cellulolytic communities at aerobic-anaerobic interfaces in straw. Applied Microbiol. 57:131-137.
Hill, P.W., J.F. Farrar et D.L. Jones. 2009. Decoupling of microbial glucose uptake and mineralization in soil. Soil Biol. Biochem. 40 : 616-624
Hodge, A. 2004. The plastic plant : root responses to heterogeneous supplies of nutrients. New Phytologist 162:9-24.
Hodge, A., D. Robinson et A. Fitter. 2000. Are microorganisms more effective than plants at competing for nitrogen ? Trends in Plant Sci. 5(7) : 304-318.
Hoyle, F.C., et D. V. Murphy & P. C. Brookes. 2008. Microbial Response to the Addition of Glucose in Low-Fertility Soils. Biol Fertil Soils (2008) 44:571-579
Idris, M. 2003. Effect of intergrated use of minerai, organic N and Azotobacter on the yield, yield components and N-nutrition of wheat (Triticum aestivum L.). Pakistan Journal of biological sciences 6(6):539-543.
Jeuffroy, M-H et S. Recous. 1999. Azodyn: a simple model simulating the date of nitrogen deficiency for décision support in wheat fertilization. Eur. J. Agron. 10 : Pages 129-144
Jingguo, W. et L.R. Bakken. 1997. Compétition for nitrogen during decompostion of plant residues in soil : effect of spatial placement of N-rich and N-poor plant residues. Soil Biol. Biochem. 29(2) : 153-162.
Jones, David L., David Shannon, Daniel Murphy, John Farrar. 2004. Role of dissolved organic nitrogen (DON) in soil N cycling in grassland soils. Soil Biol. Biochem. 36(5) : 749-756)
Jones, D.L., Darrah PR. 1996. Re-Sorption of Organic Compounds By Roots of Zea Mays L. and Its Conséquences In The Rhizosphere. 3. Characteristics Of Sugar Influx And Efflux. Plant and Soil 178: 153-160.
Kader, M.A., M.H. Mian et M.S. Hoque. 2002. Effects of Azotobacter inoculant on the yield and nitrogen uptake by wheat. Online Journal of Biological Sciences 2(4):259-261.
Kader, MA, A.A. Mamun, S.M.A. Hossain et M.K. Hasna. 2000. Effects of Azotobacter application on the growth and yield of transplant aman rice and nutritent status of post-harvest sol. Pak. J. of Biological Sciences 3 :1144-1147.
Kumar, Virendra et I.P.S. Ahlawat. 2004. Carry-over effect of biofertilizers and nitrogen applied to wheat (Triticum aestivum) and direct applied N in maize (Zea mays) in wheat-maize cropping system. Ind. J. Agron. 49 : 233-236
Kuzyakov, Y. 2002. Factors affecting rhizosphere priming effects. J. Plant. Nutr. Soil Sci. 165 : 382-396. Lynch, J.P. et M.D. Ho. 2005. Rhizoeconomics: Carbon Costs of Phosphorus Acquisition. Plant ans Soil 269: 45-56
Mahboob, A. et M. Asghar. 2002. Response of Triticum aestivum to an association diazotroph inoculum under varying levels of nitrogen fertilizer. Asian J. Plant Sci. 1(6):642-643.
Martin, W.P. et P.E. Brown. 1938. Inoculation Experiments with Azotobacter on some lowa Soils Soil Sci. Soc. Am. J. 2 : 271-278.
Mondini, C., M. L. Cayuela . M. A. Sanchez-Monedero, A. Roig et P. C. Brookes. 2006. Soil microbial biomass activation by trace amounts of readily available substrate. Biol Fertil Soils 42: 542-549
Nguyen, C., A. Guckert. 2001. Short-Term Utilisation Of 14C-[U]Glucose By Soil Microorganisms In Relation To Carbon Availability. Soil Biology & Biochemistry 33 (2001) 53±60
Schneckenberger, K., D. Demin, K. Stahr et Y. Kuzyakov. 2008. Microbial utilization and mineralization of [14C]glucose added in six orders of concentration to soil. Soil Biol. Biochem. 40: 1981-1988
Senapati, H.K., S.S. Sahoo, B. Jena et D. Sahoo. 2004. Impact of integrated plant nutrient management on upland rainfed rice cultivation. Soil, nutrient and water management - IRRN 29(2):56-57.
Watt, M., W.K. Silk et J.B. Passioura. 2006. Rates of Root and Organism Growth, Soil Conditions, and Temporal and Spatial Development of the Rhizosphere. Annals of Botany 97: 839-855, 2006
Wheeler, T.R., T.D. Hong, R.H. Ellis, G.R. Batts, J.I.L. Morison and P. Hadley. 1996. The duration and rate of grain growth, and harvest index, of wheat [Triticum aestivum L.) in response to temperature and C02. J. Exp. Bot. 47: 623-630,
Wichern, Florian, Elmar Eberhardt, Jochen Mayer, Rainer Georg Joergensen, Torsten Müller. 2008. Nitrogen Rhizodeposition in Agricultural Crops: Methods, Estimates And Future Prospects. Soil Biol. Biochem. 40 : 30-48
Yadav, K. S., Narendra Singh, Sunita Suneja, Malik, Y. S., Nehra, B. K., Narula, N. 2003. Nitrogen economy through the use of Azotobacter biofertilizer in potato. J. Indian Potato Assoc., 30(1/2) 81-82

## Revendications

1. Procédé d'immobilisation temporaire de reliquats d'azote minéral présents dans un sol agricole à l'automne avant semis d'une grande culture non-légumineuse d'hiver, dans lequel :
- on applique :
∘ soit en pré-semis de ladite grande culture non-légumineuse d'hiver à des résidus de culture pailleux dudit sol agricole dans lequel les reliquats d'azote minéral sont compris entre 10 et 70 mg-N par kg de sol agricole sur une profondeur de sol arable de l'ordre de 20 cm ;
∘ soit à des semences de ladite grande culture non-légumineuse d'hiver avant semis dans ledit sol agricole ;
une solution nutritive contenant des oses ou des osides capables de générer lesdits oses par simple hydrolyse, puis ;
- on procède au semis des semences de ladite grande culture non-légumineuse d'hiver dans ledit sol agricole ;
**caractérisé en ce que** la solution nutritive est dépourvue d'azote et de tout autre macroélément.

2. Procédé selon la revendication 1, **caractérisé en ce que** pour l'application à des résidus de culture pailleux dudit sol agricole, les reliquats d'azote minéral sont compris entre 25 et 60 mg-N par kg de sol agricole sur une profondeur de sol arable de l'ordre de 20 cm.

3. Procédé selon l'une des revendications 1 ou 2, **caractérisé en ce que** pour l'application à des résidus de culture pailleux dudit sol agricole, les reliquats d'azote minéral sont d'environ 35 mg-N par kg de sol agricole sur une profondeur de sol arable de l'ordre de 20 cm.

4. Procédé selon la revendication 1, **caractérisé en ce que** pour l'application à des semences, les reliquats d'azote minéral dudit sol agricole sont compris entre 0 et 30 mg-N par kg de sol agricole sur une profondeur de sol arable de l'ordre de 20 cm.

5. Procédé selon la revendication 4, **caractérisé en ce que** pour l'application à des semences, les reliquats d'azote minéral dudit sol agricole sont compris entre 10 et 25 mg-N par kg de sol agricole sur une profondeur de sol arable de l'ordre de 20 cm.

6. Procédé selon l'une des revendications 4 ou 5, **caractérisé en ce que** pour l'application à des semences, les reliquats d'azote minéral dudit sol agricole sont d'environ 15 mg-N par kg de sol agricole sur une profondeur de sol arable de l'ordre de 20 cm.

7. Procédé selon l'une des revendications 1 à 6, **caractérisé en ce qu'**on applique une dose d'oses ou d'osides équivalent à entre 0,1 et 5 kg d'oses ou d'osides par hectare de sol agricole.

8. Procédé selon la revendication 7, **caractérisé en ce que** la dose d'oses ou d'osides est comprise entre 0,4 et 2,5 kg par hectare.

9. Procédé selon l'une des revendications 7 ou 8, **caractérisé en ce que** la dose d'oses ou d'osides est de 1 kg par hectare.

10. Procédé selon l'une des revendications 1 à 9, **caractérisé en ce que** la grande culture non-légumineuse d'hiver est choisie parmi un groupe comprenant le blé, l'orge, l'avoine, le seigle, le triticale, le colza et le lin.

11. Procédé selon l'une des revendications 1 à 10, **caractérisé en ce qu'**on applique ;
∘ soit en pré-semis de ladite grande culture d'hiver non-légumineuse à des résidus de culture pailleux dudit sol agricole ;
∘ soit à des semences de ladite grande culture d'hiver non-légumineuse avant semis dans ledit sol agricole ;
une dose-hectare de biomasse *Azotobacteraceae* obtenue expressément à cet effet contenant entre 1 x 10¹² et 1 x 10¹³ cellules viables et correctement formulées et conditionnées.

12. Procédé selon la revendication 11, **caractérisé en ce que** la dose-hectare de biomasse *Azotobacteraceae* contient 5 x 10¹² cellules viables.

## Patentansprüche

1. Verfahren zur vorübergehenden Immobilisierung von Rückständen von Mineralstickstoff, die in einem landwirtschaftlichen Boden im Herbst vor der Aussaat eines großflächigen Anbaus von Winter-Nichtleguminosen vorhanden sind, wobei:
- Folgendes angewendet wird:
∘ entweder vor der Aussaat des großflächigen Anbaus von Winter-Nichtleguminosen auf Reste von strohhaltigem Anbau des landwirtschaftlichen Bodens, wobei die Rückstände von Mineralstickstoff zwischen 10 und 70 mg-N pro kg landwirtschaftlichen Bodens auf einer Tiefe des Ackerbodens im Bereich von 20 cm liegen;
∘ oder auf Samen des großflächigen Anbaus von Winter-Nichtleguminosen vor der Aussaat in dem landwirtschaftlichen Boden;
eine Nährlösung, die Monosaccharide oder Glykoside enthält, die dazu in der Lage sind, die Monosaccharide durch einfache Hydrolyse zu erzeugen, dann;
- dazu übergegangen wird, Samen des großflächigen Anbaus von Winter-Nichtleguminosen in dem landwirtschaftlichen Boden zu säen;
**dadurch gekennzeichnet, dass** die Nährlösung ohne Stickstoff und jedes andere Makroelement ist.

2. Verfahren nach Anspruch 1, **dadurch gekennzeichnet, dass** für die Anwendung auf Reste von strohhaltigem Anbau des landwirtschaftlichen Bodens die Rückstände von Mineralstickstoff zwischen 25 und 60 mg-N pro kg landwirtschaftlichen Bodens auf einer Tiefe des Ackerbodens im Bereich von 20 cm liegen.

3. Verfahren nach einem der Ansprüche 1 oder 2, **dadurch gekennzeichnet, dass** für die Anwendung auf Reste von strohhaltigem Anbau des landwirtschaftlichen Bodens die Rückstände von Mineralstickstoff ungefähr 35 mg-N pro kg landwirtschaftlichen Bodens auf einer Tiefe des Ackerbodens im Bereich von 20 cm sind.

4. Verfahren nach Anspruch 1, **dadurch gekennzeichnet, dass** für die Anwendung auf Samen die Rückstände von Mineralstickstoff des landwirtschaftlichen Bodens zwischen 0 und 30 mg-N pro kg landwirtschaftlichen Bodens auf einer Tiefe des Ackerbodens im Bereich von 20 cm liegen.

5. Verfahren nach Anspruch 4, **dadurch gekennzeichnet, dass** für die Anwendung auf Samen die Rückstände von Mineralstickstoff des landwirtschaftlichen Bodens zwischen 10 und 25 mg-N pro kg landwirtschaftlichen Bodens auf einer Tiefe des Ackerbodens im Bereich von 20 cm liegen.

6. Verfahren nach einem der Ansprüche 4 oder 5, **dadurch gekennzeichnet, dass** für die Anwendung auf Samen die Rückstände von Mineralstickstoff des landwirtschaftlichen Bodens ungefähr 15 mg-N pro kg landwirtschaftlichen Bodens auf einer Tiefe des Ackerbodens im Bereich von 20 cm sind.

7. Verfahren nach einem der Ansprüche 1 bis 6, **dadurch gekennzeichnet, dass** eine Dosis von Monosacchariden und Glycosiden, die zwischen 0,1 und 5 kg Monosacchariden oder Glycosiden pro Hektar landwirtschaftlichen Bodens entspricht, angewendet wird.

8. Verfahren nach Anspruch 7, **dadurch gekennzeichnet, dass** die Dosis von Monosacchariden oder Glycosiden zwischen 0,4 und 2,5 kg pro Hektar liegt.

9. Verfahren nach einem der Ansprüche 7 oder 8, **dadurch gekennzeichnet, dass** die Dosis von Monosacchariden oder Glycosiden 1 kg pro Hektar ist.

10. Verfahren nach einem der Ansprüche 1 bis 9, **dadurch gekennzeichnet, dass** der großflächige Anbau von Winter-Nichtleguminosen ausgewählt ist aus einer Gruppe, umfassend Weisen, Gerste, Hafer, Roggen, Triticale, Raps und Leinen.

11. Verfahren nach einem der Ansprüche 1 bis 10, **dadurch gekennzeichnet, dass**;
∘ entweder vor der Aussaat des großflächigen Anbaus von Winter-Nichtleguminosen auf Reste von strohhaltigem Anbau des landwirtschaftlichen Bodens;
∘ oder auf Samen des großflächigen Anbaus von Winter-Nichtleguminosen vor der Aussaat in dem landwirtschaftlichen Boden;
eine Hektar-Dosis von Azotobacteraceae-Biomasse, erhalten ausdrücklich für diesen Zweck, enthaltend zwischen 1 x 10¹² und 1 x 10¹³ lebensfähigen Zellen und korrekt formuliert und konditioniert, angewendet wird.

12. Verfahren nach Anspruch 11, **dadurch gekennzeichnet, dass** die Hektar-Dosis *Azotobacteraceae-*Biomasse 5 x 10¹² lebensfähige Zellen enthält.

## Claims

1. Method of temporary immobilisation of inorganic nitrogen credits remaining in agricultural soil in the autumn before sowing seeds for an extensive non-leguminous winter crop, in which:
- one applies:
∘ either before sowing seeds for said extensive non-leguminous winter crop, to straw crop residues from said agricultural soil in which the inorganic nitrogen credit is between 10 and 70 mg-N per kg of agricultural soil on an arable soil depth of the order of 20 cm;
∘ or to seeds of said extensive non-leguminous winter crop before the seeds are sown in said agricultural soil;
a nutrient solution containing oses or osides capable of generating said oses by simple hydrolysis, is applied, then;
- seeds of said extensive non-leguminous winter crop are sown in said agricultural soil;
**characterised in that** the nutrient solution does not contain any nitrogen or any other macroelement.

2. Method according to claim 1, **characterised in that** for application to straw crop residues from said agricultural soil, the inorganic nitrogen credit is between 25 and 60 mg-N per kg of agricultural soil on an arable soil depth of the order of 20 cm.

3. Method according to claim 1 or 2, **characterised in that** for application to straw crop residues from said agricultural soil, the inorganic nitrogen credit is about 35 mg-N per kg of agricultural soil on an arable soil depth of the order of 20 cm.

4. Method according to claim 1, **characterised in that** for application to seeds, the inorganic nitrogen credit in said agricultural soil is between 0 and 30 mg-N per kg of agricultural soil on an arable soil depth of the order of 20 cm.

5. Method according to claim 4, **characterised in that** for application to seeds, the inorganic nitrogen credit in said agricultural soil is between 10 and 25 mg-N per kg of agricultural soil on an arable soil depth of the order of 20 cm.

6. Method according to either claim 4 or 5, **characterised in that** for application to seeds, the inorganic nitrogen credit in said agricultural soil is about 15 mg-N per kg of agricultural soil on an arable soil depth of the order of 20 cm.

7. Method according to one of claims 1 to 6, **characterised in that** a dose of oses or osides is applied equivalent to between 0.1 and 5 kg of oses or osides per hectare of agricultural soil.

8. Method according to claim 7, **characterised in that** the dose of oses or osides is between 0.4 and 2.5 kg per hectare.

9. Method according to one of claims 7 and 8, **characterised in that** the dose of oses or osides is 1 kg per hectare.

10. Method according to one of claims 1 to 9, **characterised in that** the extensive non-leguminous winter crop is chosen from a group including wheat, barley, oats, rye, triticale, rapeseed and flax.

11. Method according to one of claims 1 to 10, **characterised in that** one applies;
∘ either before sowing seeds for said extensive non-leguminous winter crop, to straw crop residues from said agricultural soil;
∘ or to seeds of said extensive non-leguminous winter crop before the seeds are sown in said agricultural soil;
a dose-hectare of *Azotobacteraceae* biomass obtained specifically for this purpose containing between 1 x 10¹² and 1 x 10¹³ viable cells and correctly formulated and conditioned.

12. Method according to claim 11, **characterised in that** the dose-hectare of *Azotobacteraceae* biomass contains 5 x 10¹² viable cells.
